# EUROPEAN PATENT SPECIFICATION

(11) **EP 0 495 665 B1**
(45) Date of publication and mention of the grant of the patent: **14.04.1999**
(21) Application number: 92300396.6
(22) Date of filing: 16.01.1992
(51) Int. Cl.: H01L 41/09

(54) **Ultrasonic stepping motor**
Ultraschallschrittmotor
Moteur pas à pas à ultrasons

(30) Priority: 17.01.1991 JP 3924/91; 03.04.1991 JP 70882/91; 07.05.1991 JP 101260/91; 28.08.1991 JP 217072/91
(43) Date of publication of application: 22.07.1992
(73) Proprietor: SEIKO EPSON CORPORATION, Shinjuku-ku Tokyo-to (JP)
(72) Inventor: Miyazawa, Osamu, Seiko Epson Corporation, Suwa-shi, Nagano-ken (JP); Furukawa, Tsuneaki, Seiko Epson Corporation, Suwa-shi, Nagano-ken (JP); Kitahara, Jouji, Seiko Epson Corporation, Suwa-shi, Nagano-ken (JP)
(74) Representative: Sturt, Clifford Mark

(56) References cited:
- EP-A- 424 139
- EP-A- 447 172
- PATENT ABSTRACTS OF JAPAN vol. 13, no. 68 (E-716)16 February 1989 & JP-A-63 253 882 ( CITIZEN WATCH CO LTD ) 20 October 1988

## Description

The present invention relates to an ultrasonic stepping motor which is driven by use of vibration of an ultrasonic wave.

Hitherto, a great variety of ultrasonic motors have been proposed and realized, as disclosed, for example, in Japanese Patent Application Nos. 58-93477, 59-37673, 59-122385 and 60-51478. A conventional ultrasonic stepping motor comprises an elastic member which serves as a stator coupled to vibrator, usually a piezoelectric ceramic and a rotor. A driving signal with a frequency near to the resonance frequency of the stator is applied to the vibrator. Thus the stator vibrates. The rotor which is in frictional contact with the stator is also driven by the vibration of the stator.

When two driving signals are applied intermittently having the same amplitude but with a phase difference, two standing wave vibrations are generated but with different phases. Accordingly, a progressive wave is induced on the stator and hence the rotor is driven continuously. Thus, all of the conventional ultrasonic motors rotate continuously as long as a driving signal is applied thereto. This dictates that feedback control must be effected in order to control the rotational speed and stop position of the conventional ultrasonic motors. Furthermore, there is a relatively large power consumption.

In addition, the vibrator has a number of vibratory sections which are driven independently. In prior art, the areas of the vibratory sections are different from each other to provide the two standing waves of different phases. As each section is driven singly, differences are produced between the two phases in the amplitude and resonance frequency of the vibratory wave. Consequently, the nodes of the composite progressive wave are not coincident with the expected positions.

In another conventional arrangement of polarised sections of the piezoelectric ceramic, vibratory sections which are either larger or smaller than 1/2 of the wavelength of the vibratory wave are formed at both extremities, respectively, of each phase in order to maximize the driving area. In the conventional arrangement, however, the polarised sections at the two extremities of each phase are different in area from each other, so that each phase is out of balance. Accordingly, when each phase is driven singly, the node position of the vibratory wave in each phase is not coincident with the boundary between the vibratory sections.

EP-A-424139, published on 24.04.91, discloses an ultrasonic motor comprising a stator of a planar configuration with a piezoelectric vibrator mounted to one side, and a rotor which is arranged to make contact with the stator and having a plurality of projections spaced from one another and which make contact with the stator. The object of such arrangement is to permit continuous drive or step wise drive. Nevertheless, further improvements are desireable in ensuring acuracy of movement in the step wise mode.

JP-A-63253882 discloses a progressive wave stepping motor comprising a pair of stators generating circulating progressive waves independently of one another, and a rotor formed a plane disc. Stepping is achieved by switching driving circuits for the stators. There is no disclosure of the use of standing waves.

EP-A-447172, published on 18.09.91, discloses an ultrasonic motor having a vibrator driven by a piezoelectric element ring having a plurality of angularly spaced sub-elements, wherein the rotor has angularly spaced apart non-contact regions out of contact with the vibrator and which are spaced from each other by half the wave length of the intended vibration. Further improvements are desirable in accuracy of providing step wise motion.

In accordance with the present invention there is provided an ultrasonic stepping motor comprising;
a stator including an elastic member;
a rotor in contact with the stator so as to be driven by frictional force;
generating means comprising a vibrator mounted on the stator and which switches in use between a plurality of vibratory states in a time sequence;
the rotor having a non-uniform configuration providing unequal distributions of rigidity and mass therein;
characterised in that the non-uniform configuration is such that excitation of the vibrator generates like progressive waves and standing waves both in the stator and rotor in a predetermined vibration mode of the rotor, to cause the rotor to move in a step wise manner.

Thus the present invention provides an ultrasonic motor which can be driven stepwisely and hence facilitates sequence control.

According to a preferred arrangement of vibratory sections of the present invention as claimed, polarised sections which are either larger or smaller than 1/2 of the wavelength of the vibratory wave are disposed with equal area at the two extremities of each phase. Accordingly, each phase can be formed in a well-balanced condition, so that a node of the vibratory wave is formed at the boundary between the vibratory sections, thus solving the above-described problems of the prior art. In addition, since in the present invention the node position of the standing wave produced by driving each phase is coincident with the boundary between the vibratory sections and the amplitudes of the standing waves produced by the two phases are equal to each other, the node positions of a composite wave of these standing waves are formed at the expected positions. Further, if driving areas increase equally, a stable driving condition is obtained and it is possible to realise an ultrasonic motor of high efficiency.

The present invention as claimed provides an ultrasonic stepping motor having a stator which switches over a plurality of vibratory states in time series manner, and a rotor in contact with the stator so as to be driven by frictional force, wherein the rotor has a vibration mode in a selective direction.

That is to say, the rotor is driven stepwisely by combining standing wave vibrations in the drive of the stator and switching between a progressive wave vibration and standing wave vibration. Sequential rotation is thus achieved without the need for feedback control.

The ultrasonic stepping motor of the present invention as claimed is further characterised in that the vibratory states of the stator include at least a composite vibration (hereinafter referred to as "progressive wave") formed from two standing wave vibrations, and a standing wave vibration state where a vibration mode is formed in a selective direction.

The ultrasonic stepping motor of the present invention as claimed is further characterised in that the stator is provided with relief portions at respective positions corresponding to the loops or antinodes of a standing wave vibration; the stator being in contact with the rotor at positions corresponding to the nodes of the vibration.

The attainment of an ultrasonic stepping motor which can be driven stepwisely whilst minimising power consumption but maintaining high accuracy enables such motors to be used for driving the hands of a watch or clock.

The above and other objects, features and advantages of the present invention as claimed will become more apparent from the following description of the preferred embodiments thereof, taken in conjunction with the accompanying drawings, in which like reference numerals denote like elements, and of which:
Fig. 1 is a block diagram schematically illustrating the ultrasonic stepping motor of the present invention;
Figs. 2(a), 2(b) and 2(c) illustrate the positioning principle;
Fig. 3 illustrates the relationship between a vibration mode of the rotor and the contact portions of the stator;
Fig. 4 is a sectional view of one embodiment of the ultrasonic stepping motor of the present invention;
Fig. 5 is a perspective view of a first embodiment of the rotor of the ultrasonic stepping motor of the present invention;
Fig. 6 is a perspective view of a second embodiment of the rotor;
Fig. 7 is a perspective view of a third embodiment of the rotor;
Figs. 8(a) and 8(b) illustrate the way in which the rotor is forcedly vibrated;
Fig. 9 is a perspective view of a fourth embodiment of the rotor;
Fig. 10 is a perspective view of an example not being an embodiment of the rotor;
Fig. 11 is a circuit diagram showing one embodiment of a driving circuit for the ultrasonic stepping motor of the present invention;
Fig. 12 is a timing chart exemplarily showing signal waveforms at various portions in the circuit shown in Fig. 11;
Fig. 13 is a top plan view of a first embodiment of the stator of the ultrasonic stepping motor of the present invention;
Fig. 14 is a top plan view of a second embodiment of the stator;
Fig. 15 is a top plan view of a third embodiment of the stator;
Figs. 16 and 18 show the arrangement of polarized sections of a piezoelectric ceramic in one embodiment of the present invention;
Fig. 17 is a plan view of a rotor in one embodiment;
Fig. 19 is a block diagram showing one embodiment of the vibrator driving method according to the present invention;
Fig. 20 illustrates the operation of one embodiment of the present invention;
Fig. 21 is a circuit showing a further embodiment of the vibrator driving method according to the present invention;
Fig. 22 is a timing chart showing signal waveforms at various portions in the circuit shown in Fig. 21;
Fig. 23 is a block diagram showing another embodiment of the vibrator driving method according to the present invention;
Fig. 24 is a block diagram showing one embodiment of the vibrator exciting method according to the present invention;
Fig. 25 is a circuit diagram showing a first embodiment of the vibrator exciting method according to the present invention;
Fig. 26 is a timing chart showing signal waveforms at various portions in the circuit shown in Fig. 25;
Fig. 27 is a circuit diagram showing a second embodiment of the vibrator exciting method according to the present invention;
Fig. 28 is a timing chart showing signal waveforms at various portions in the circuit shown in Fig. 27;
Fig. 29 illustrates another example of the arrangement of vibratory elements and driving electrodes;
Fig. 30 is a block diagram showing another embodiment of the vibrator exciting method according to the present invention;
Fig. 31 is a circuit diagram of one embodiment of the combination of a differentiating circuit and a switching circuit; and
Fig. 32 is a timing chart showing signal waveforms at various portions in the circuit shown in Fig. 31.

The present invention as claimed will be described below in detail by way of preferred embodiments and with reference to the accompanying drawings.

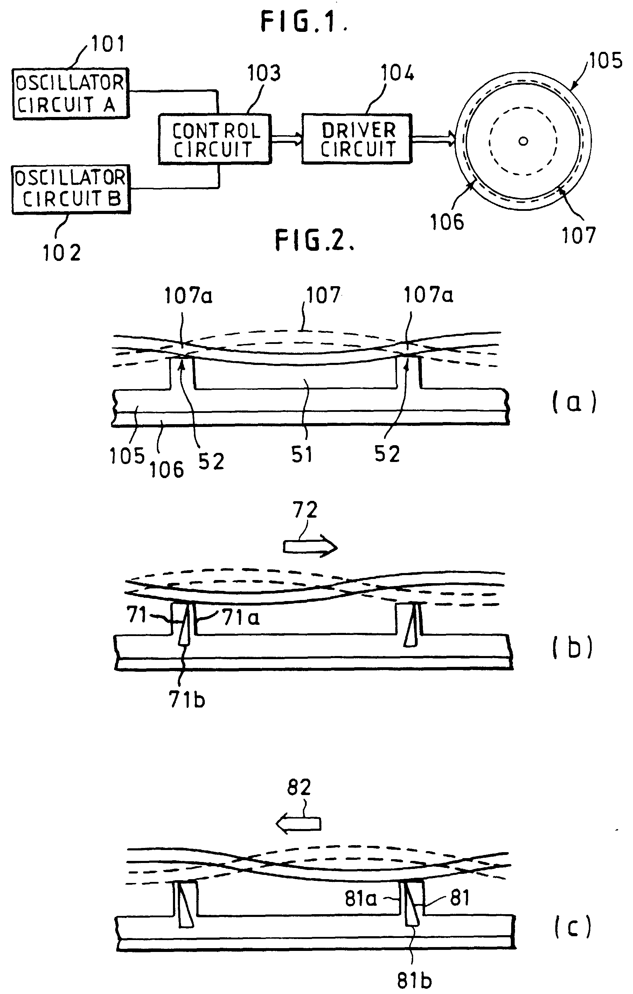

Fig. 1 is a block diagram schematically showing an ultrasonic stepping motor illustrating the present invention. In the following, the ultrasonic stepping motor will be explained on the assumption that an elastic member serves as a stator, and the rotating member as a rotor. A pair of oscillator circuits A and B, which are denoted by reference numerals 101 and 102, each deliver a signal of a frequency which is in the vicinity of the resonance frequency of a stator 105 that has a vibrator 106 attached thereto. A control circuit 103 supplies the signals from the oscillator circuits A 101 and B 102 to the vibrator 106 through a driver circuit 104 while switching over the signals from one to the other. A rotor 107, which is in frictional contact with the stator 105, is driven by the vibration of the stator 105. The modes of vibrations that are induced on the stator 105 by the oscillator circuits A 101 and B 102 are equal in shape but offset in position from each other. Accordingly, if two standing wave vibrations are generated at positions which are offset by the quarter-wavelength, for example, elliptical motion (progressive wave) is induced on the surface of the stator 105, thus enabling the rotor 107 to be driven, as is well known in the conventional progressive wave type ultrasonic motors. In this case, since the driving signals are equal in frequency but different in phase from each other, there is no need for two oscillator circuits but it is only necessary to use one oscillator circuit and a phase shifting means. It should be noted that, if either one of the oscillator circuits A 101 and B 102 is driven singly or both are simultaneously driven in phase with each other, one standing wave vibration mode is formed. When a progressive wave is produced, the rotor 107 moves continuously, whereas, when a standing wave is produced, it is set in a predetermined position. When no wave is produced, the rotor 107 is held by friction occurring between the same and the stator 105. The principle on which the rotor 107 is set in a predetermined position will be explained later. With the above-described arrangement, if the progressive and standing waves are sequentially switched over, the rotor 107 is driven stepwisely (intermittently). If an interval of time during which no wave is produced is provided, electric power can be saved.

Figs. 2(a) to 2(c) illustrate the principle of positioning of the ultrasonic stepping motor according to the present invention. The stator 105, which has the vibrator 106 comprising, for example, a piezoelectric ceramic, attached thereto, is provided with relief portions 51 and contact portions 52 which are in contact with the rotor 107. For example, if a standing wave vibration is induced on the rotor 107 by excitation of the vibrator 106, nodes 107a are formed at selective positions which are determined by the driving method employed, as shown in Fig. 2(a). The thin lines and chain lines in the figure show the vibrating condition of the rotor 107. If the position of a node 107a is to the left of the corresponding contact portion 52 of the stator 105, as shown in Fig. 2(b), the rotor 107 presses against the contact portion 52 only when it is deformed downwardly, applying force in the direction of the arrow 71. This force can be resolved into vertical force 71a and horizontal force 71b. Thus, the rotor 107 is moved in the direction of the arrow 72 by a counterreaction of the horizontal force 71b. If the position of a node 107a is to the right of the corresponding contact portion 52 of the stator 105, as shown in Fig. 2(c), the rotor 107 applies force in the direction of the arrow 81, which is reverse to that in the case of Fig. 2(b), the force consisting of vertical force 81a and horizontal force 81b, so that the rotor 107 is moved in the direction of the arrow 82 by the horizontal force 81b. Accordingly, the rotor 107 moves in such a manner that the contact portions 52 of the stator 105 and the positions of the nodes 107a of the rotor 107 coincide with each other. In other words, if the position of the vibration mode of the stator 107 has been predetermined, the rotor 107 is set in a predetermined position.

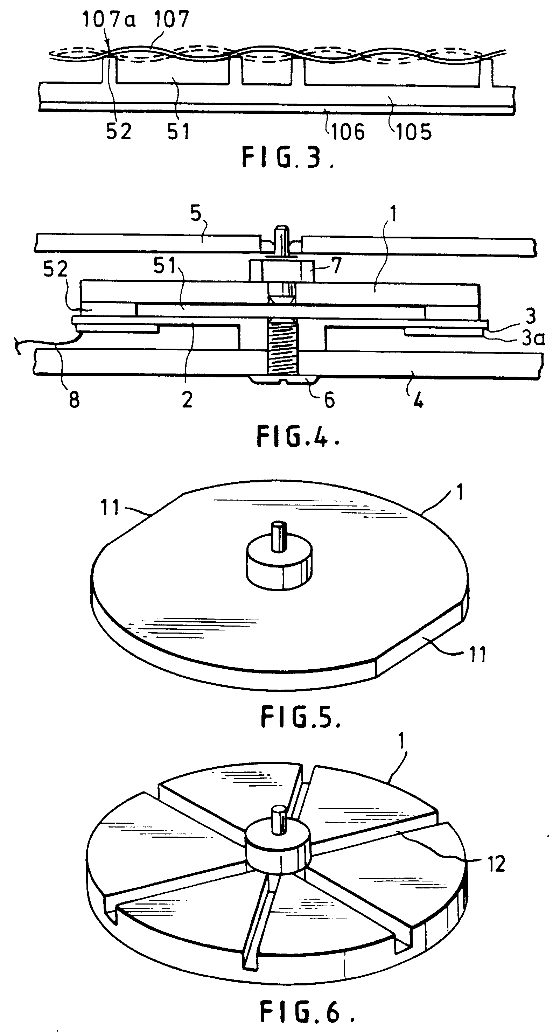

Fig. 3 illustrates one example of the relationship between the vibration mode of the rotor 107 and the contact portions 52 of the stator 105. In the illustrated arrangement, the contact portions 52 are not provided to correspond to all the positions of the nodes 107a. Since it is only necessary that each contact portion 52 come in contact with a portion which is in the vicinity of the corresponding node 107a and where the vibration amplitude is small, there is no particular restriction on the configurations of the contact portions 52 and the relief portions 51. There is no particular restriction on the order of vibration mode, either.

Fig. 4 is a sectional view of one embodiment of the ultrasonic stepping motor according to the present invention, in which a disk-shaped stator 2 has a vibrator 3 attached thereto. The vibrator 3 comprises a piezoelectric ceramic having an electrode pattern 3a formed thereon.

An alternating voltage is applied between the stator 2 and the electrode pattern 3a through lead wire 8. A rotor 1 in which a flexural vibration of a standing wave is induced is engaged with a pinion 7 for taking out torque, and it is positioned by a guide plate 5 in such a manner as to be able to rotate freely. The stator 2 is secured to a frame 4 by use of a screw 6. The stator 2 is provided with relief portions 51 which are designed to allow the rotor 1 to vibrate without interference, and contact portions 52 which are in contact with the rotor 1 to drive it frictionally. In this arrangement, the piezoelectric ceramic, i.e., the vibrator 3, is distorted when subjected to a voltage, causing a flexural vibration to be induced on the stator 2. In consequence, the rotor 1 is given the vibration through the contact portions 52, thus generating a flexural vibration of standing wave. At this time, if the rotor 1 vibrates at or near the resonance frequency, the direction or the vibration mode is determined specifically due to variations in the manufacture and in the properties of the material used: even if the rotor 1 has a disk-shaped configuration. Thus the rotor 1 becomes stationary in a specific direction with respect to the contact portions 52 of the stator 2, as has been described in connection with Figs. 2(a) to 2(c). If the vibrator 3 is vibrated in a plurality of conditions to form a progressive wave on the stator 2, the rotor 1 is driven continuously through the contact portions 52. Accordingly, if the progressive and standing wave vibrations on the stator 2 are switched over, the continuous rotation mode and the positioning mode can be switched over from one to the other. For example, if the rotor 1 has three nodal diameters and the stator 2 has contact portions which are provided in all or any of the six divided positions, the rotor 1 can be driven to rotate through 360° in six discrete steps.

Fig. 5 is a perspective view of a first embodiment of the rotor 1 of the ultrasonic stepping motor according to the present invention, which is provided with cut portions 11 in order to selectively set the direction of the vibration mode in the resonance condition. With this arrangement, the degeneracy of vibration modes is readily resolved, and a vibration mode is formed only in a fixed direction.

Fig. 6 is a perspective view of a second embodiment of the rotor 1 of the ultrasonic stepping motor of the present invention, in which the upper surface of the rotor 1 is provided with slits 12. With this arrangement, distributions are formed which determines the degree of rigidity of the rotor 1 and the size of mass thereof, so that the direction of the vibration mode is selectively fixed.

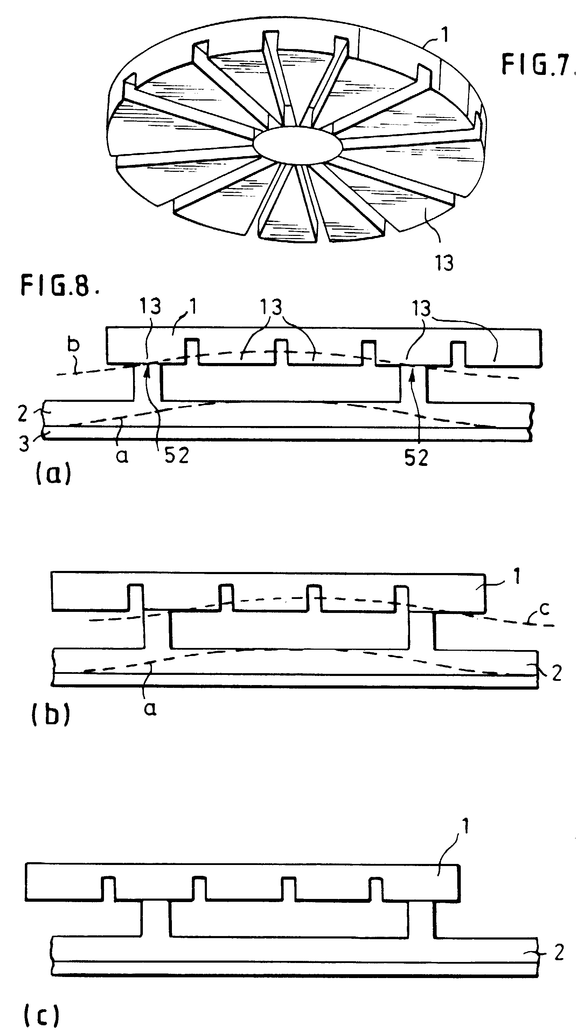

Fig. 7 is a perspective view of a third embodiment of the rotor 1 of the ultrasonic stepping motor of the present invention, in which the lower surface of the rotor 1 is provided with projections 13. With this arrangement, distributions are formed which determine the degree of rigidity and the size of the mass, so that the direction of the vibration mode is fixed selectively, in the same way as in the arrangement shown in Fig. 6. In this case, since the projections 13 have high rigidity and come in contact with the contact portions of the stator, nodes are readily formed.

In the embodiments shown in Figs. 6 and 7, if the rigidity and mass distributions are equidivisional and correspond to the nodes of the vibration mode of the stator, the rotor 1 can be forced to vibrate. In other words, it is possible to generate a vibration in which nodes are formed by portions which are high in terms of rigidity and mass even at a frequency other than the resonance frequency.

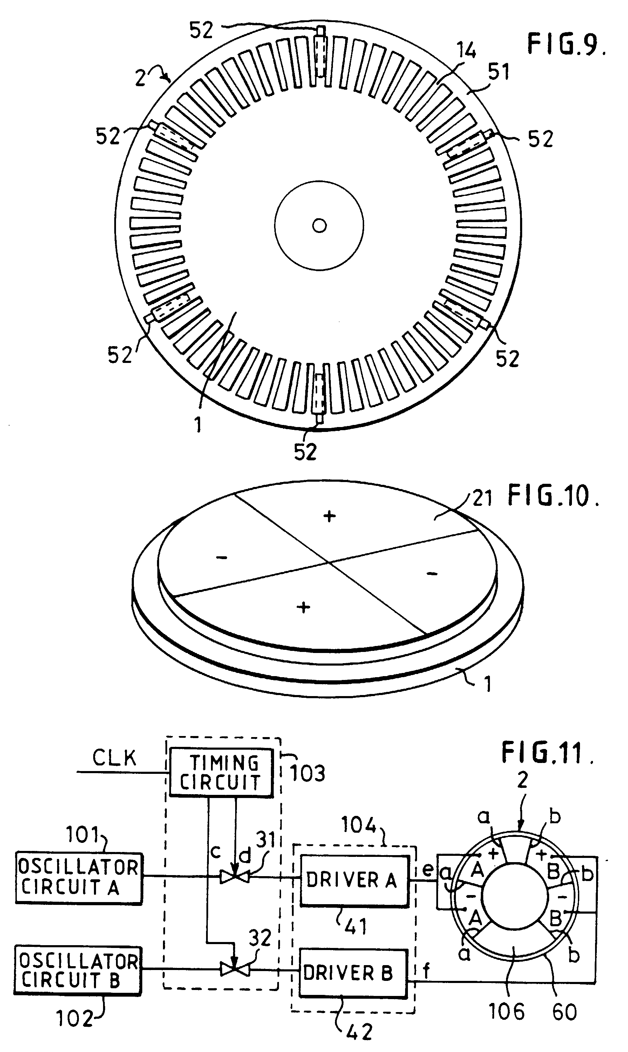

Figs. 8(a) to 8(c) illustrate the way in which the rotor of the ultrasonic stepping motor of the present invention is forced to vibrate. In these figures, a linear ultrasonic stepping motor is shown as an example of the present invention. The stator 2 is vibrated in the standing wave mode, as shown by the chain line a, by the vibrator 3 attached thereto. The contact portions 52 of the stator 2, which are provided at respective positions corresponding to the nodes of the standing wave vibration, are in contact with the rotor 1. Since the rotor 1 has projections 13 provided at respective positions which are equally divided per node of the vibration on the stator 2, the rotor 1 is forced to drive in a vibration mode (with the same shape as that of the vibration mode of the stator), shown by the chain line b. Thus the projection(s) 13 which is/are at a selected position forms a node(s). Accordingly, the rotor 1 is stabilized in the position shown in Fig. 8(a). However, a progressive wave is produced on the stator 2, the rotor 1 moves to the left. If a standing wave is produced on the stator 2 again, the vibration mode, shown by the chain line a, is generated on the stator 2 again, as shown in Fig. 8(b). On the rotor 1 is formed a vibration mode, shown by the chain line c, which is shifted to the right with respect to the vibration mode shown in Fig. 8(a). Accordingly, the rotor 1 moves in a direction in which the vibrations modes of the rotor 1 and the stator 2 are superposed according to the principle illustrated in Figs. 2(a) to 2(c), resulting in the rotor 1 being positioned as shown in Fig. 8(c). As will be clear from the foregoing, with a rotor in which the rigidity and mass are divisionally distributed, a vibration mode is formed on the stator and the rotor in a selective direction, and the rotor can be driven stepwisely in accordance with the number by which the rigidity and mass are divided.

Fig. 9 is a top plan view of a fourth embodiment of the rotor 1 and stator 2 underneath of the ultrasonic stepping motor of the present invention, in which the rotor 1 is provided with a number of slits 14, for example 60. The stator 2 is provided with, for example, six divisions each consisting of a contact portion 52 and a relief portion 51. With this arrangement, the slits 14 in the rotor 1 can be readily formed by press working or other similar means. In this case, there are six combinations of directions of nodes, so that the rotor 1 can be driven to rotate through 360° in 60 discrete steps.

Fig. 10 is a perspective view of an example not being an embodiment of the rotor 1 of the ultrasonic stepping motor of the present invention, in which the rotor 1 has a vibrator 21 comprising, for example, a piezoelectric ceramic, attached thereto. The signs + and - denote directions of polarization. By externally applying an alternating voltage, for example, a 4λ standing wave vibration mode is generated. Accordingly, positioning can be effected independently of the vibrating condition of the stator. Even if no alternating voltage is applied externally in the same arrangement, when the rotor 1 is vibrated by exciting the stator and an electric charge is induced on the piezoelectric ceramic, the resulting field produces the same effect as in the case where a voltage is applied externally. It should be noted that the configuration of the rotor 1, the polarization pattern of the piezoelectric ceramic and so forth are not limited to the arrangement of this example.

Although the ultrasonic stepping motor of the present invention has been detailed by way of some embodiments, it should be noted that in the foregoing embodiments arrangements for forming a vibration mode in a specific direction are shown exemplarily and that the present invention is not limited to the arrangements of the described embodiments. For example, the density, rigidity, etc. may be varied by employing a composite material.

Fig. 11 is a circuit diagram of one embodiment of a driving circuit for the ultrasonic stepping motor of the present invention. A control circuit 103 switches signals from oscillator circuits A 101 and B 102 by changeover switches 31 and 32, which comprise transmission gates or the like, on the basis of a reference signal CLK. A vibrator 106, which is attached to a stator 2, comprises a piezoelectric ceramic 60 polarized positive (+) and negative (-). The polarization is arranged at selected angles shown exemplarily in the figure. When a voltage is applied to portions A through a driver A 41 in a driver circuit 104, a 3λ vibration mode having a node per 60° at points a is generated. Whereas, when portions B are driven through a driver B 42, a 3λ vibration mode having a node per 60° at points b is generated. In this arrangement, if the portions A or B are driven singly, a standing wave is formed in that position, whereas, if drive is effected with signals which are 90° out of phase with each other, a progressive wave is formed.

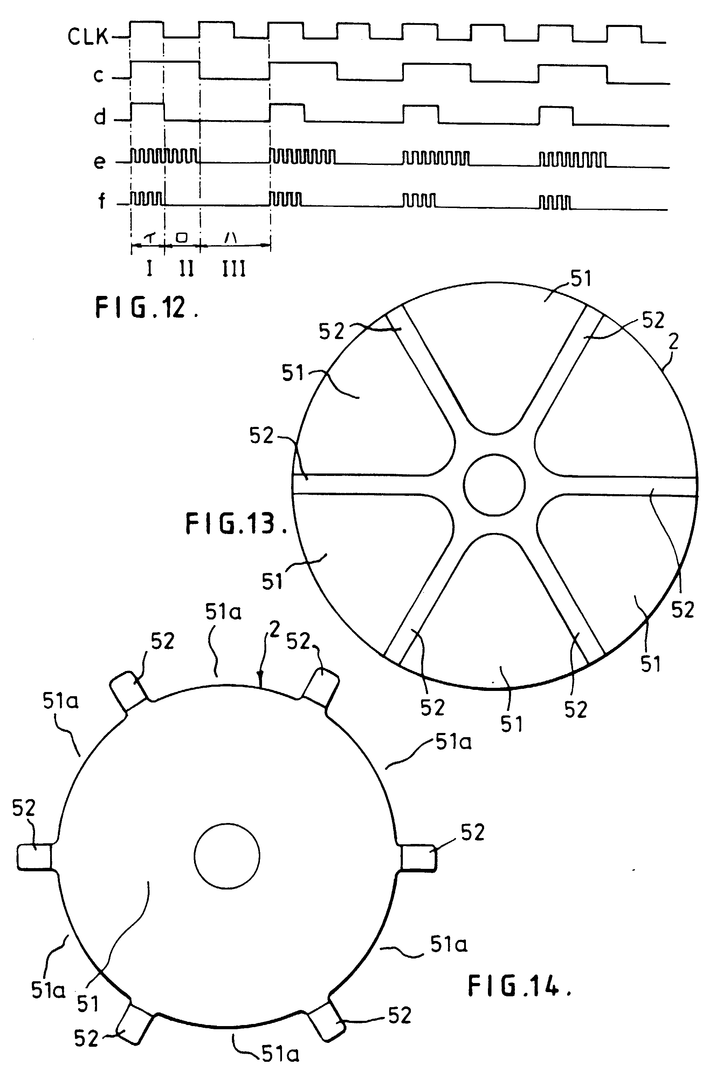

Fig. 12 is a timing chart exemplarily showing signal waveforms at various portions of the circuit diagram shown in Fig. 11. The signals from the oscillator circuits A and B are switched in response to switching signals c and d which are delivered synchronously with CLK, so that signals e and f are applied to the vibrator. Since the oscillator circuits A and B are equal in frequency but 90° out of phase with each other, during the period I a progressive wave is formed to rotate the rotor, during the period II a standing wave is formed at the position a to position the rotor, and during the period III no vibration is generated, so that the rotor does not move and it is therefore unnecessry to supply electric power.

The embodiment shown in Figs. 11 and 12 switches over between the generation of a progressive wave, the generation of a standing wave and the suspension of the excitation. However, there is no particular restriction on the order of vibration mode, the way of excitation, the driving timing and duration, etc. The standing wave may be generated in such a way that the rotor is fed intermittently by generation of a progressive wave and it is positioned at times by generation of a standing wave. In addition, the standing wave may be generated either by driving the portions A or by driving the portions B. It is also possible to combine together these two excitation modes.

Fig. 13 is a top plan view of a first embodiment of the stator 2 of the ultrasonic stepping motor of the present invention, in which a 3λ vibration mode is generated on the stator 2, as shown by the chain line. The stator 2 is formed with relief portions 51 at respective positions which correspond to the antinodes, or loops, of the vibration mode in order not to interfere with the flexural vibration of the rotor (not shown; see Fig. 4 for a side view thereof). The remaining portions of the stator 2, which are defined as contact portions 52, are disposed at respective positions which correspond to the nodes of the vibration mode, the contact portions 52 being in frictional contact with the rotor. In this arrangement, there is no interference between the flexural vibrations of the stator and the rotor and it is easy for the contact portions 52 to form nodes. Accordingly, a stable vibration mode is obtained.

Fig. 14 is a top plan view of a second embodiment of the stator 2 of the ultrasonic stepping motor of the present invention, in which the stator 2 is provided with contact portions 52 which are formed only on the outer peripheral portion of the stator 2. Outer peripheral relief portions 51a in addition to relief portions 51 obviate interference with the rotor. In this arrangement, nodes are formed at the positions shown by the chain lines. In addition, the contact portions 52 can be readily formed by cutting the outer periphery by gear milling or other similar means.

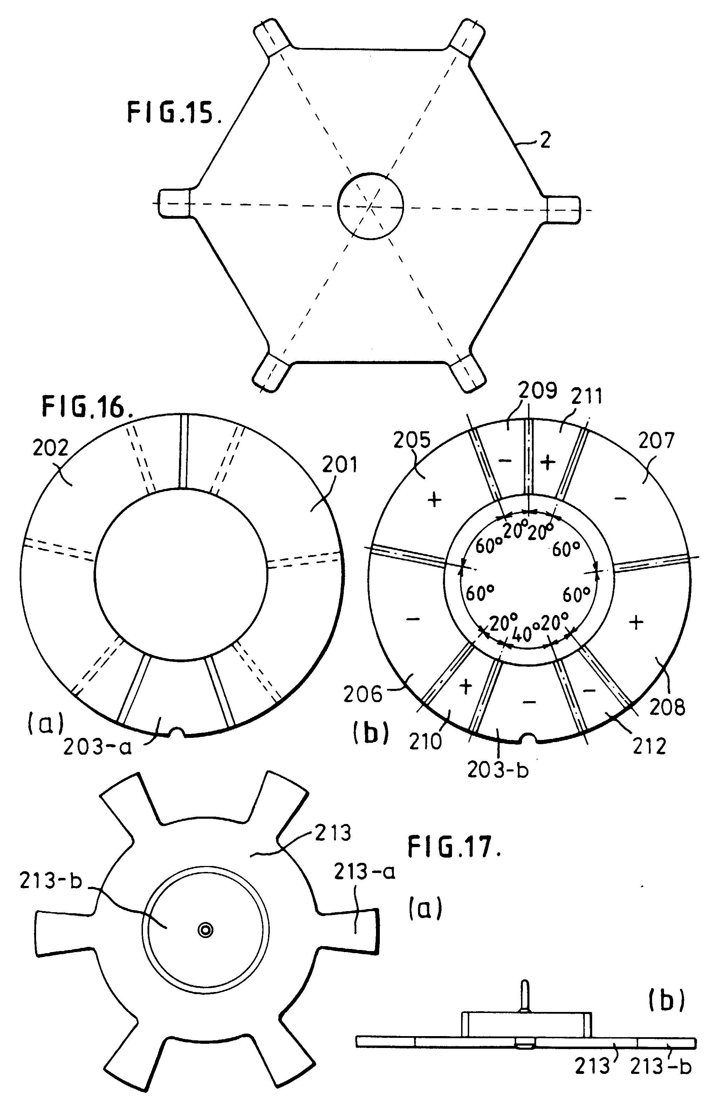

Fig. 15 is a top plan view of a third embodiment of the stator 2 of the ultrasonic stepping motor of the present invention, in which the stator 2 is not in disk-like form but has concentric axial symmetry.
Accordingly nodes are formed at the positions shown by the chain lines, and the stator 2 can be readily machined in the same way as in the embodiment shown in Fig. 14.

The embodiments shown in Figs. 13, 14 and have a particular stator configuration so as to provide the stator with relief portions thus enabling the flexural vibrations of the stator and the rotor to not interfere with each other and to stabilize the vibration by allowing the stator to come into contact with the rotor at the portions corresponding to the nodes of the vibration. There is therefore no particular restriction on the configurations of the relief and contact protions, the type of vibration mode and so forth.

One embodiment concerning the arrangement of vibratory sections of the piezoelectric ceramic and the configuration of driving portions will be explained below with reference to the drawings.

Fig. 16 exemplarily shows the arrangement of polarized divisions of the piezoelectric ceramic which is coupled to the elastic member or stator of the present invention. The signs + and - in the figure denote the directions of polarization of the piezoelectric ceramic. Fig. 16(a) shows the obverse side of the piezoelectric ceramic, while Fig. 16(b) shows the reverse side thereof. Reference numerals 205, 206, 207 and 208 denote polarized sections corresponding to 1/2 of the wavelength of a vibratory wave generated on the elastic member. Since the arrangement shown in Fig. 16 is designed so that a vibratory wave with a size corresponding to 3 wavelengths is produced on the circumference of the elastic member, the polarized sections 205, 206, 207 and 208 each correspond to one sixth of the circumference and hence comprise 1/2 of the wavelength of the vibratory wave. Polarized sections 209, 210, 211 and 212, which are smaller than the polarized sections 205, 206, 207 and 208, each correspond to 1/6 of the wavelength of the vibratory wave. The polarized sections 209 and 210 are located at the extremities, respectively, of a phase A, whereas the polarized sections 211 and 212 are located at the extremities, respectively, of a phase B. Thus, the phase A is formed in a well-balanced condition with the polarized sections 205, 206, 209 and 210 configured in axial symmetry. Phase B is also formed in a well-balanced condition with the polarized sections 207, 208, 211 and 212 configured in axial symmetry. The phases A and B are formed with a phase difference corresponding to 1/3 of the wavelength of the vibratory wave spatially on the circumference. A polarised section 203-b is provided for detecting the state of a vibratory wave produced on the elastic member. Reference numerals 201, 202 and 203-a on the obverse side denote an electrode A, an electrode B and a detecting electrode, respectively.

The following is a description of one example of the operation of an ultrasonic motor in which the foregoing piezoelectric ceramic formed with the polarised sections is bonded to an elastic member.

If a stator of an ultrasonic motor is formed by bonding the reverse side of the above-described piezoelectric ceramic to an elastic member, a voltage of equal potential can be applied to the reverse side between one of the electrodes and an unnominated part of the piezoelectric ceramic, which is defined as a common electrode.

First, an alternating voltage of a given frequency is applied between the electrode 201 and the common electrode. In consequence, a standing wave in which nodes are formed at the boundary between the polarised sections 205 and 206 of phase A and at the two equi-angle radii thereof is produced throughout the stator since the phase A is formed in axial symmetry and in a well-balanced condition. This wave is defined as a first standing wave, and this driving state as a first driving state. Next, as a second driving state, an alternating voltage of the same frequency as above is applied between the electrode 202 and the common electrode. Since the phase B is also formed in axial symmetry and in a well-balanced condition, a second standing wave in which nodes are formed at the boundary between the polarized sections 207 and 208 of the phase B and at the two equi-angle radii is produced throughout the stator. Further, as a third driving state, in-phase alternating voltages of the described frequency are respectively applied between the electrode 201 and the commond electrode and between the electrode 202 and the common electrode. In consequence, a composite wave of the first and second standing waves is produced throughout the stator. The nodes of the composite wave are located at positions intermediate between the nodes of the first standing wave and those of the second standing wave.

Fig. 17 shows one embodiment of the rotor of the above-described ultrasonic motor, in which the rotor has six cut portions or six projections 213-a on the circumference. If the rotor formed in this way is brought into press contact with the above-described stator and a standing wave is produced on the stator, the projections 213-a of the rotor are subjected to force in the direction toward the nodes from the anti-nodes or loops of the standing wave, so that the rotor is eventually stabilized to stop at the positions of the nodes, as is described in Japanese Patent Application No. 02-70324 (1990). Accordingly, if the above-described driving states 1, 2 and 3 are sequentially established in the mentioned order or in the reverse order, the node positions move on the circumference of the stator in response to the sequential change of the driving states, so that the rotor which is in press contact with the stator also rotates together with the nodes. Since the phases A and B are formed with a phase difference corresponding to 1/3 of the wavelength, that is, a phase difference of 40°, the rotor is driven intermittently at regular intervals of 20°.

In the foregoing ultrasonic motor, the node positions of a standing wave produced by singly driving each phase and the size of the amplitude thereof are also important, not to mention the resonance frequency of the standing wave.

Although in this embodiment the phase difference between the phases A and B is 1/3 of the wavelength (=40°), it should be noted that the present invention is not necessarily limited thereto.

The foregoing embodiment is an ultrasonic motor which is driven intermittently by use of standing waves in the phases A and B and a composite wave of the two standing waves.

The following is a description of an ultrasonic motor which is driven intermittently by using only a standing wave without using a composite wave.

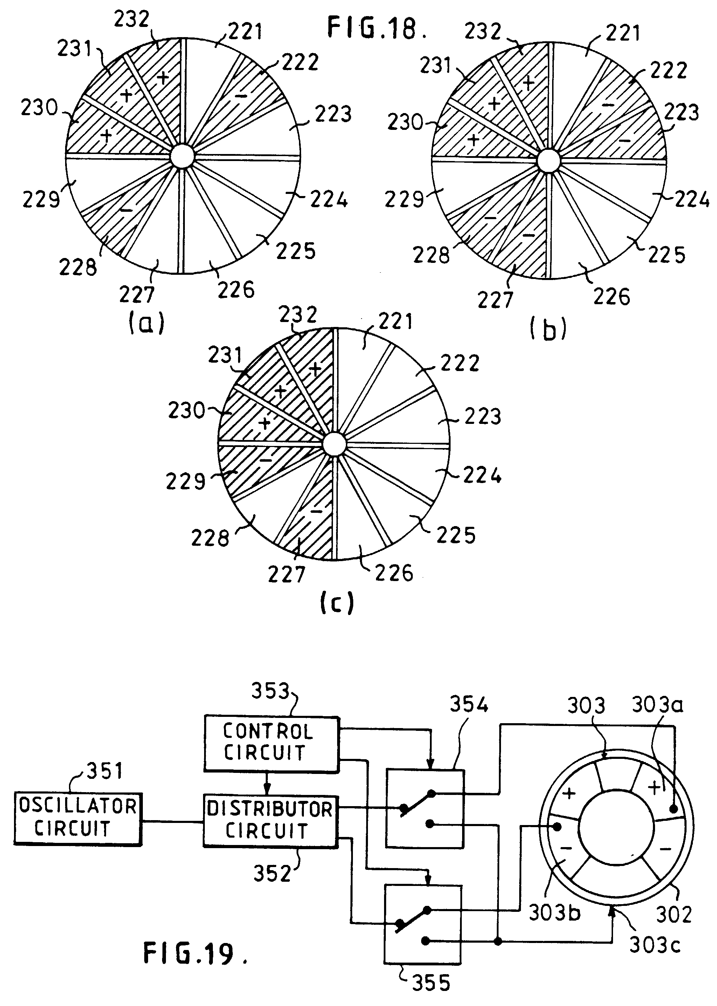

Since the driving principle is the same as the above, description thereof is omitted, and vibratory sections and driving sections will be explained below. Fig. 18 shows a piezoelectric ceramic according to one embodiment of the present invention, which is formed with 12 vibratory sections 221 to 232 which are divided by an electrode pattern and polarized in the same direction. With the piezoelectric ceramic arranged in this way, if a standing wave with a size corresponding to two wavelengths is desired to produce on the elastic member such that loops of the standing wave are formed at the positions of the vibratory sections 231, 222, 225 and 228, the vibratory sections, for example, which are shown by the hatched lines in Fig. 18(a) should be driven. The signs + and - in the figure denote the polarities of the driving voltage during a certain period of time. The driving portions are configured in axial symmetry as a whole. In Fig. 18(b), the vibratory sections 223 and 227 are driven in addition to the driving sections shown in Fig. 18(a); in this case also, the driving sections are configured in axial symmetry as a whole. In Fig. 18(c), the vibratory sections which are hatched are driven. More specifically, among the vibratory sections 227, 228 and 229, which correspond to the half-wavelength of the vibratory wave, the sections 227 and 229 are driven. Accordingly, in the vibratory sections corresponding to the half-wavelength, the driving portions are configured in axial symmetry. In the above-described driving state, the node positions of the vibratory wave are formed at the expected positions with high accuracy.

Although in the foregoing two embodiments the present invention has been described by way of one example in which the ultrasonic stepping motor is driven intermittently by use of standing waves, it should be noted that the present invention is not necessarily limited thereto. For example, the driving method may be such that alternating voltages which are temporally out of phase with each other are applied to the phases A and B, respectively, to produce a progressive wave, and the driving voltages are output intermittently so that the rotor is driven intermittently by the progressive wave, and the foregoing standing wave is produced at regular or arbitrary intervals of time. With this driving method, the error in rotation that occurs during the intermittent drive by the progressive wave is cancelled when the standing wave is produced, so that there will be no cumulative error in rotation.

Fig. 19 is a block diagram of one embodiment of the method of driving the vibrator according to the present invention, in which the stator 302 is vibrated through electrodes 303a and 303b of two sets of vibratory elements. The electrodes of the vibratory elements apply a voltage of equal potential to portions (denoted by + and -) which are different in polarization direction, divided by the chain line. An oscillator circuit 351 outputs a signal of a frequency in the vicinity of the resonance frequency of the stator 302 having a vibrator 303 attached thereto, which comprises a plurality of vibratory elements, the signal being supplied to the electrodes of the vibratory elements through a distributor circuit 352. A pair of switching circuits A 354 and B 355 have a period during which these switching circuits supply the signal from the distributor circuit 352 to the electrodes 303a and 303b of the respectively corresponding vibratory elements and a period during which the switching circuits supply the signal to a common electrode 303c of the vibrator 303. A control circuit 353 controls the operations of the distributor circuit 352 and the switching circuits A 354 and B 355 so as to form the following various states: a state where the signal is supplied to the phase A; a state where the signal is supplied to the phase B; a state where the signal is supplied to both the phases A and B; and a state where no signal is supplied to the phases A and B. The operation of the above-described arrangement will be explained below.

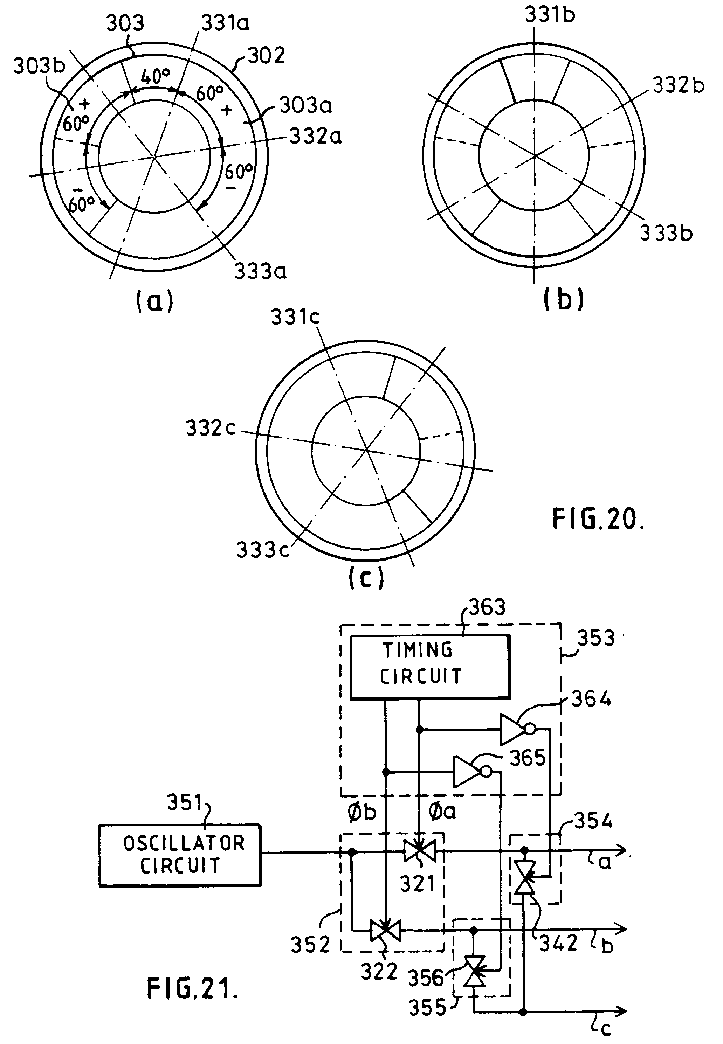

Figs. 20(a) to 20(c) illustrate the operation of the arrangement shown in Fig. 19. The electrode patterns 303a and 303b of the vibratory elements are each polarized by 120° and the respective electrode patterns are polarized in two different directions through 60° each and separated from each other through 40°. Since the vibrator 303 is attached to the stator 302, if an alternating voltage is applied to either the electrode 303a or 303b, flexural vibration in which a node is formed at the position of the boundary between the polarized portions is generated. At this time, if the frequency of the alternating voltage is at or near the resonance frequency that corresponds to 3 wavelengths (hereinafter referred to as "3λ") of the flexural vibration, the vibration amplitude is large, and the motor performance improves. Fig. 20(a) shows a case where the electrode 303a is driven. In this case, nodes are formed at the positions 331a, 332a and 333a of the extremities of the electrode 303a and at the boundary between the two polarized portions. However, since the portion of the electrode 303b also vibrates at the same time, an electric charge corresponding to the polarization and distortion direction is induced, so that the vibrator 303 itself is distorted by the electric charge left uncanceled. That is, the nodes 331a, 332a and 333a are not formed at the desired positions. However, according to the vibrator driving method, described in connection with Fig. 19, the vibratory element electrodes and the common electrode are connected through the respective switching circuits. Accordingly, no electric charge is accumulated, and the nodes are formed at the desired positions. Fig. 20(b) shows a case where the electrode 303b is driven. In this case, the electrode 303a that is not driven is connected to the common electrode in the same way as the above, so that nodes 331b, 332b and 333b are formed at the desired positions. Fig. 20(c) shows a case where nodes are formed at respective positions intermediate between the node positions shown in Fig. 20(a) and those shown in Fig. 20(b). When the electrodes 303a and 303b are driven simultaneously a composite vibration mode is produced, and nodes are formed at the positions 331c, 332c and 333c.

Although in the foregoing arrangement each pair of adjacent nodes are 60° separate from each other in one vibratory state, if the vibratory states are switched over in the sequence: e.g., the state shown in Fig. 20(a) → the state shown in Fig. 20(c) → the state shown in Fig. 20(b) → the state shown in Fig. 20(a), the node positions move counterclockwise through 20° at a time. That is, the rotor is driven intermittently clockwise. For example, if the node positions are switched over for each second and the rotational speed of the rotor is reduced to 6°/20° to thereby drive a pointer, it can function as a second hand that moves through 6° per second. In such a case, even if the drive is suspended after the rotor has moved, the rotor can be held in position by virtue of the friction occurring between the rotor and the stator, which is advantageous with a view to lowering the consumption of electric power. In addition, since each vibratory element electrode is connected to the common electrode when it is not driven, it is possible to prevent generation of undesired distortion due to accumulation of electric charge. On the other hand, if the electrode is opened to hold the vibrator at a certain potential, it is possible to prevent deformation due to external force. Accordingly, in an application where an external impact may be applied, e.g., in the case of a watch, it is preferable that the vibrator should be held at a predetermined potential during a non-drive period to prevent vibrations due to disturbance and it should be connected to the common electrode before the initiation of the drive to remove unnecessary distortion. Such control can be readily realized by allowing the control circuit 353 to control the switching circuits A 354 and B 355.

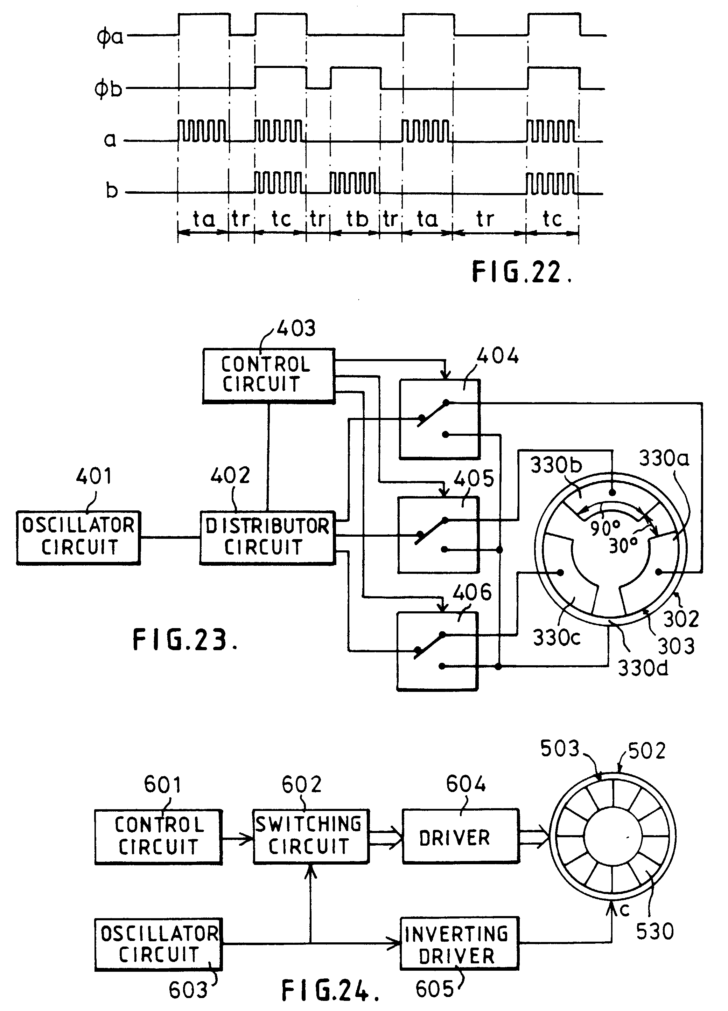

Fig. 21 is a circuit diagram showing one embodiment of the vibrator driving method, and Fig. 22 is a timing chart showing signal waveforms at various portions in the circuit. A distributor circuit 352 comprises analog switches 321 and 322. A switching circuit A 354 comprises an analog switch 342, and a switching circuit B 355 also comprises an analog switch 352. Signal lines a, b, and c are connected to vibratory element electrodes 303a and 303b and a common electrode 303c, respectively. An oscillator circuit 351 outputs a signal φ to the distributor circuit 352. The analog switches 321 and 322 in the distributor circuit 352 are switched in response to output signals φₐ and φ_{b} from a control circuit 353 to supply signals a and b to the electrodes 303a and 303b. In Fig. 22, tₐ is a period for the vibratory state shown in Fig. 20(a), t_{b} a period for the vibratory state shown in Fig. 20(b), t_{c} a period for the vibratory state shown in Fig. 20(c), and tᵣ a period during which the vibrator is not driven. The control circuit 353 comprises a timing circuit 363 for controlling the delivery timing of the signals a and b and the changeover of the periods tₐ, t_{b}, t_{c} abd tᵣ, and inverters 364 and 365. In this circuit thus arranged, when the signals φₐ a low and φ_{b} are at a low level, the vibratory element electrodes 303a and 303b are respectively connected to the common electrode 303c through the inverters 364 and 365 and the analog switches 342 and 352. It should be noted that in this embodiment one example of connecting the electrodes 303a and 303b to the common electrode 303c is shown only for illustrative purposes, and the circuit configuration, the switching timing and so forth are not necessarily limited to this embodiment.

Fig. 23 is a block diagram showing another embodiment of the vibrator driving method. The vibrator 303 that is attached to the stator 2 has three vibratory element electrodes 330a, 330b and 330c each having a width corresponding to an angle of 90° and which are separated from each other by 30°. A distributor circuit 402 distributes a signal from an oscillator circuit 401 to three destinations. Switching circuits A 404, B 405 and C 406 have a period during which these circuits supply the signal from the distributor circuit 402 to the corresponding electrodes 330a, 330b and 330c, and a period during which the switching circuits connect the corresponding electrodes 330a, 330b and 330c to a common electrode 330d. The distributor circuit 402 and the three switching circuits A, B and C are controlled by a control circuit 403. The operations of these circuits are similar to those in the embodiment shown in Figs. 21 and 22. That is, by sequentially exciting the electrodes 330a, 330b and 330c, the node positions of a 2λ vibration mode can be moved through 30° at a time. In addition, when the signal is supplied to the electrode 330a, for example, the electrodes 330b and 330c are connected to the common electrode 330d through the switching circuits B 405 and C 406; therefore, voltages which are induced on the electrodes 330b and 330c have no effect on the node positions of the vibration.

The present invention, which has been detailed by way of embodiments, aims at releasing the electric charge induced in between the vibratory element electrodes which are not driven to thereby eliminate adverse effects of the electric charge. Accordingly, the configurations of the vibrator and the electrode patterns, the type of vibration mode, the exciting method, etc. are not necessarily limited to the above-described embodiments. In addition, the way of releasing the electric charge is not limited to the short-circuiting method described above. It is also possible to release only a predetermined amount of electric charge by using a resistance. Some electrodes may be comprised of a portion which is connected to the common electrode and another portion which is not connected to it. With this arrangement, the node positions of the vibration can be adjusted even more delicately to the desired positions.

Fig. 24 is a block diagram showing one embodiment of the vibrator exciting method. In this embodiment, the present invention is applied to an ultrasonic motor which employs a piezoelectric ceramic as a vibrator 503 to produce a standing wave of flexural vibration and in which the node positions of the vibration are moved sequentially. A stator 502 causes a rotor (not shown), which is in frictional contact therewith, to move by vibratory displacement. A piezoelectric ceramic 503 comprises a plurality of vibratory elements 530 with independent driving electrodes, the piezoelectric ceramic 503 being attached to the stator 502. The piezoelectric ceramic 503 generates flexural vibration when a voltage is applied thereto. At this time, a standing wave vibration mode can be produced by locally driving the vibratory elements 530 with a suitably selected driving frequency. By changing the combination of vibratory elements 530 to be driven, the node positions of the vibration can be moved. A control 601 controls the timing at which the node positions of the vibration are moved. An oscillator circuit 603 oscillates a frequency in the vicinity of the resonance frequency of the stator 502 having the piezoelectric ceramic 503 attached thereto. A switching circuit 602 distributes the signal from the oscillator circuit to selected ones of the vibratory elements 530 to drive them. A driver 604 amplifies the signal. A voltage which is anti-phase with respect to the voltage applied to the driving electrodes is applied through an inverting driver 605 to a common electrode which is counter to the driving electrodes of the vibratory elements 530 on the piezoelectric ceramic 503.

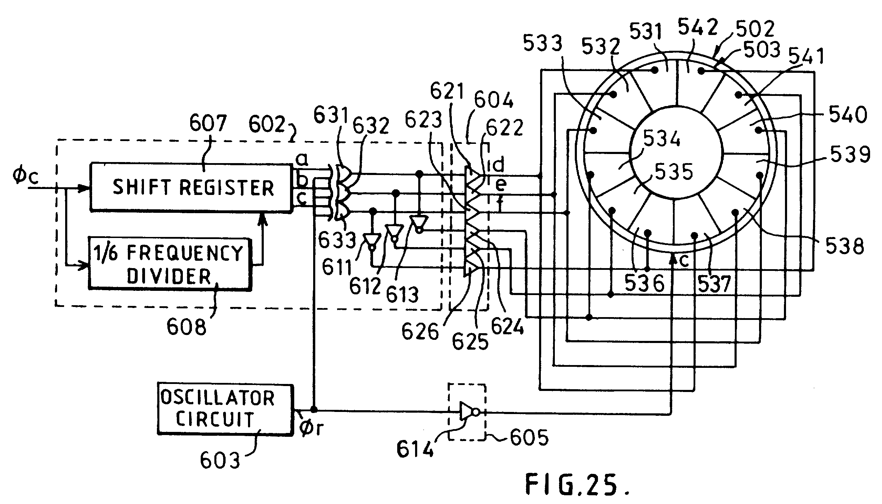

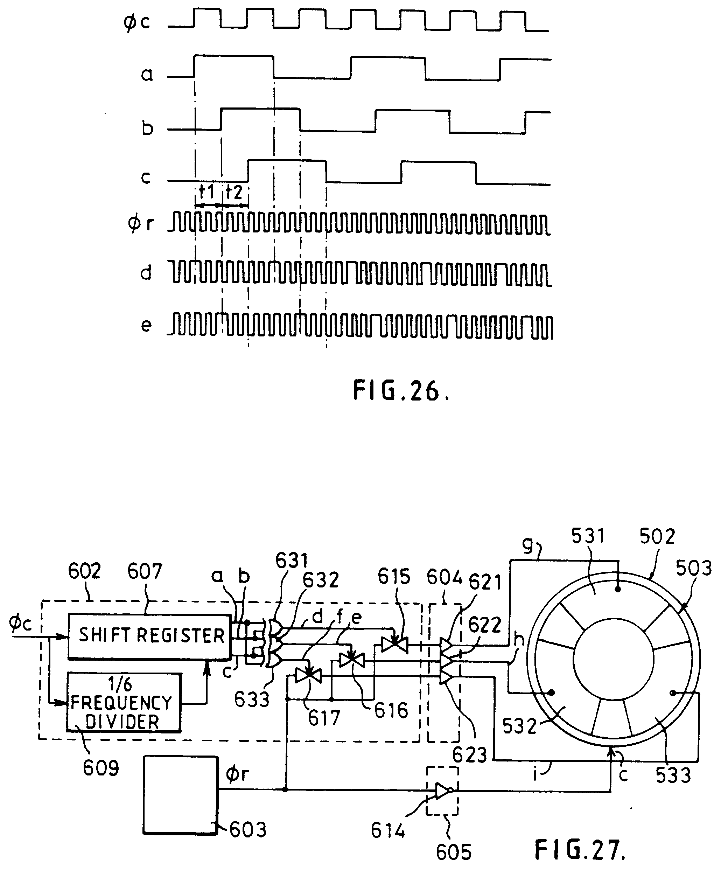

Fig. 25 is a circuit diagram showing a first embodiment of the arrangement shown in Fig. 24, and Fig. 26 is a timing chart showing signal waveforms at various portions in the circuit. In this embodiment, a vibration mode of 2λ(λ represents wavelength) is generated on the stator 502 having the piezoelectric ceramic 503 attached thereto, and two node positions are moved through 360° in 12 discrete steps of 30°. The piezoelectric ceramic 503 has 12 vibratory elements which are deformable independently of each other and which have respective driving electrodes 531 to 542. In this case, the direction of polarization may be uniform, and the common electrode is disposed over the whole area of the reverse side of the piezoelectric ceramic 503. By driving three adjacent vibratory elements and three vibratory elements which are in diagonally opposing relation to them in phase with each other, a 2λ vibration mode can be generated. If the combination of three vibratory elements is shifted through an angle (30°) corresponding to one vibratory element, the node positions also move through 30°. From a timing signal φ_{c}, signals a, b and c which are out of phase with each other are formed through a shift register 607 and a 1/6 frequency divider 608 in a switching circuit 602. From a signal φᵣ from an oscillator circuit 603, driving signals d, e and f are formed through exclusive ORs, together with inverted signals which are formed through inverters 611, 612 and 613. The voltages are applied to the vibratory element driving patterns 531 to 542 through a driver 604 comprising buffers 621 to 626. Meantime, a voltage which is anti-phase with respect to the signal φᵣ is formed through an inverting driver 605 comprising an inverter 614 or the like, and it is applied to the common electrode C on the piezoelectric ceramic 503. The signals d, e and f are inverted in phase at the respective timings of the signals a, b and c so as to be in-phase or anti-phase with respect to the signal φᵣ. When the signals d, e and f are anti-phase, the voltages are applied alternately to the driving electrode side and the common electrode side; therefore, it is possible to obtain an advantageous effect equivalent to the effect of a voltage, which is double the driving voltage, being applied to the vibratory elements are the signals d, e and f are in-phase, the potentials are equal to each other; therefore, the vibratory elements are given no substantial potential difference and not driven. In the arrangement shown in Fig. 25, during the period t₁ shown in Fig. 26 the vibratory elements 531, 532, 533, 537, 538 and 539 are driven, and during the period t₂ the vibratory elements 532, 533, 534, 538, 539 and 540 are driven. Thereafter, the positions of vibratory elements to be driven are sequentially shifted. In consequence, the node positions move through an angle (30°) corresponding to one vibratory element, causing the rotor to be driven intermittently. It should be noted that, when the in-phase voltages are applied to the driving electrode side and the common electrode side, the electric charge accumulated on the vibratory elements due to the vibration can be released, and it is therefore possible to prevent the occurrence of adverse effects of unnecessry deformation due to the electric charge.

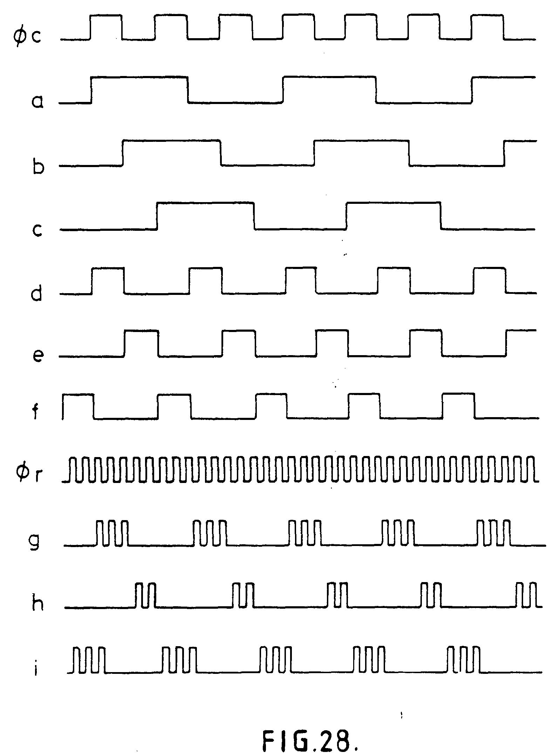

Fig. 27 is a circuit diagram showing a second embodiment of the arrangement shown in Fig. 24, and Fig. 28 is a timing chart showing signal waveforms at various portions in the circuit. The piezoelectric ceramic 503 has, for example, three vibratory elements with respective driving electrodes 531, 532 and 533, which are disposed at equally divided positions, that is, which are 120° offset from each other. In this arrangement, when the vibratory elements are sequentially driven at a frequency in the vicinity of the resonance frequency corresponding to 2λ, the node positions move through 120° at a time. Since the relative angle of two nodes is 90° in this case, the angle through which the nodes move is equivalent to 30°. A timing signal φ_{c} is formed into signals a, b and c which are out of phase with each other through a shift register 607 and a 1/6 frequency divider circuit 609 in a switching circuit 602, and the signals a, b and c are converted into signals d, e and f through exclusive ORs 631 and 632 and an exclusive NOR 633. Further, signals g, h and i are formed from a signal φᵣ from an oscillator circuit 603 through switches 615, 616 and 617 and applied to the driving electrodes 531, 532 and 533 through a driver 604 comprising buffers 621, 622 and 623. Meantime, a voltage which is anti-phase with respect to the signal φᵣ is applied to the common electrode C on the piezoelectric ceramic through an inverting driver 605 comprising an inverter 614 or the like. Accordingly, an alternating voltage is applied to the vibratory elements.

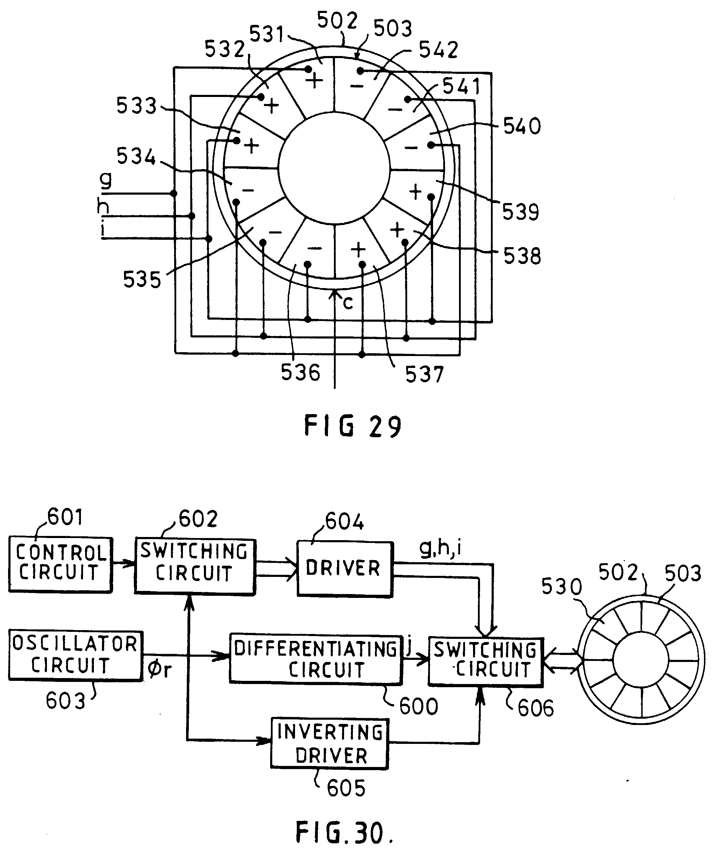

Fig. 29 is a view illustrating another example of the arrangement of the vibratory elements and driving electrodes, in which the directions of polarization are represented by the signs + and -. The driving electrodes 531, 534, 537 and 540 are driven by the signal g in Fig. 28, the driving electrodes 532, 535, 538 and 541 by the signal h, and the driving electrodes 533, 536, 539 and 542 by the signal i, thereby enabling the 2λ vibration mode to be shifted through 30° at a time in the same way as the above. In this case, since it is possible to drive only portions which correspond to the loops of the vibration at all times, the vibration amplitude can be increased.

Fig. 30 is a block diagram showing another embodiment of the vibrator exciting method according to the present invention. A signal φᵣ from an oscillator circuit 603, which oscillates a frequency in the vicinity of the resonance point of a vibrator 503 comprising a plurality of vibratory elements 530 and being attached to a stator 502 that comprises an elastic member, is switched in a switching circuit 602 in response to a timing signal from a control circuit 601 and amplified in a driver 604 to deliver driving signals g, h and i. An inverting driver 605 inverts and amplifies the signal φᵣ. A differentiating circuit 610 forms a differential waveform j from the signal φᵣ. A switching circuit 606 cuts off the signals g, h and i and shorts the common electrode C and the driving electrodes 530 at the timing represented by the differential waveform j.

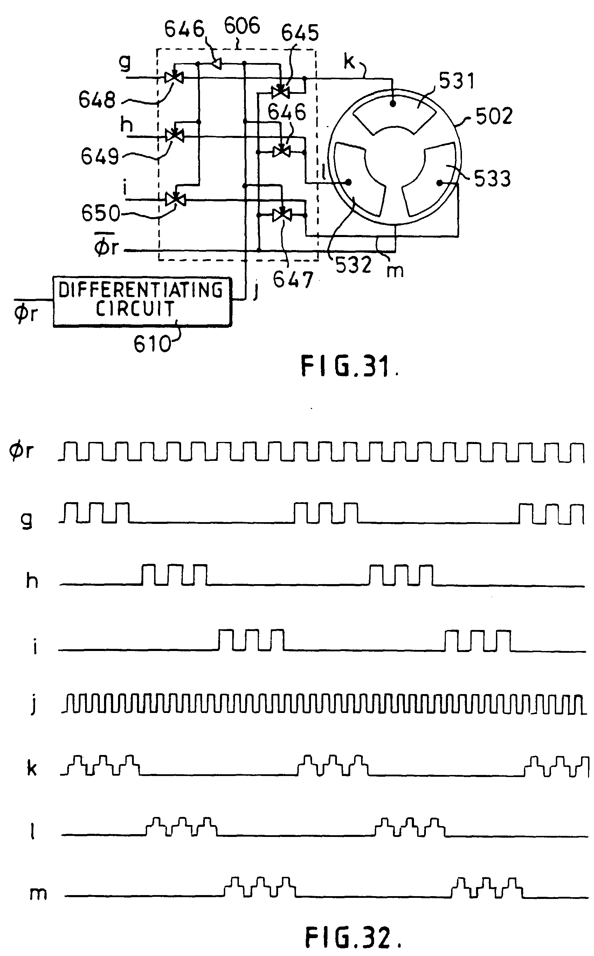

Fig. 31 is a circuit diagram showing one embodiment of the combination of the differentiating circuit 610 and the switching circuit 606 in the arrangement shown in Fig. 30, and Fig. 32 is a timing chart showing the operations of various portions of the arrangement. The differentiating circuit 610 generates a pulse j with a relatively short width in response to the rise and fall of the waveform of φᵣ. Switches 645, 646 and 647 are switched on at the timing of j to connect the driving electrodes 531, 532 and 533 and the common electrode C to thereby release the accumulated electric charge. At the same time, switches 648, 649 and 650 are switched off through an inverter 644 to cut off the signals g, h and i. Accordingly, a voltage which is double V_{DD} is applied in full to the vibratory elements. During the period when the driving electrodes 531, 532 and 533 and the common electrode C are being shorted, the exchange of electric charges is made inside the piezoelectric ceramic and no voltage is supplied from the DC power supply. Accordingly, the consumption of current can be lowered. The waveforms k, l and m conceptually show the shorted states as intermediate potentials.

It should be noted that the present invention aims at releasing the accumulated electric charge inside the vibrator and, therefore, the way of releasing electric charge is not limited to the example in which the driving electrodes and the common electrode are shorted, as in the foregoing embodiments. For example, the driving electrodes may be shorted to each other either simultaneously or individulally. There is no particular restriction on the configuration of the electrodes and the combination of electrodes to be shorted.

The vibrator exciting method is characterized by applying anti-phase voltages to the driving electrodes and the common electrode. Therefore, the vibration mode, electrode patterns, driving circuit and so forth are not limited to those described above. Although the present invention as claimed has been detailed above by way of embodiments in which the present invention is applied to an ultrasonic motor that employs a piezoelectric ceramic, it should be noted that the described embodiments are not exclusive and that the invention is applicable to any matter which relates to the excitation of a vibrator.

As has been detailed above by way of some embodiments, the ultrasonic stepping motor of the present invention makes it possible to specify the direction of a vibration mode by providing the rotor with mass and rigidity distributions. In addition, the rotor is driven stepwisely by combining standing wave vibrations in the drive of the stator and properly switching over the progressive wave vibration and the standing wave vibration. Accordingly, it is possible to obtain a desired amount of rotation in sequence without the need for feedback control or the like. Since the stator is provided with relief portions at positions corresponding to the loops of the vibration mode, it is possible to prevent interference between the flexural vibrations when a standing wave is produced, and hence possible to stabilize the vibration mode.

In the arrangement of the vibratory sections of the piezoelectric ceramic in prior art, the areas of the phases A and B are different from each other; therefore, when each phase is driven singly, differences are produced between the two phases in the amplitudue and resonance frequency of the vibratory wave, and the node positions of the composite wave are not coincident with the expected positions. According to the present invention, however, the phases A and B are in axial symmetry and equal to each other in area. It is therefore possible to eliminate the above-described problems of prior art.

In the embodiment shown in Fig. 18, driving area can be minimized without displacing the expected node positions of the vibratory wave, and it is therefore possible to realize an ultrasonic motor of low power consumption.

According to the vibrator driving method, the electrodes of vibratory elements to which no voltage is applied are connected to the common electrode, whereby the node positions of the vibration mode can be formed at the desired positions. Accordingly, it is possible to improve the positioning accuracy in stepwise drive of the motor. In an ultrasonic motor of the type which is continuously rotated forwardly or backwardly, the speed of forward rotation and that of backward rotation can be equalized with each other. In addition, the node positions can be adjusted even more delicately by contriving an effective way of releasing the accumulated electric charge.

Further, since a voltage which is double the power supply voltage can be applied to the vibrator by applying anti-phase voltages to the driving electrodes and the common electrode, the motor can be driven at a relatively low power supply voltage. Since the polarization of the piezoelectric ceramic is effected in only one direction, the production cost can be lowered. It is also possible to obtain a large vibration amplitude by exciting vibratory elements at positions corresponding to the loops of the vibration mode. In addition, it is possible to halve the current supplied from the power supply by shorting the electric charge accumulated on the piezoelectric ceramic.

Although the present invention has been described through specific terms, it should be noted here that the described embodiments are not necessarily exclusive and that various changes and modifications may be imparted thereto without departing from the scope of the invention which is limited solely by the appended claims.

## Claims

1. An ultrasonic stepping motor comprising;
a stator (2) including an elastic member;
a rotor (1) in contact with the stator so as to be driven by frictional force;
generating means comprising a vibrator (3) mounted on the stator and which switches in use between a plurality of vibratory states in a time sequence;
the rotor having a non-uniform configuration providing unequal distributions (11, 12, 13) of rigidity and mass therein;
characterised in that the non-uniform configuration is such that excitation of the vibrator generates like progressive waves and standing waves both in the stator and rotor in a predetermined vibration mode of the rotor, to cause the rotor to move in a step wise manner.

2. An ultrasonic stepping motor according to claim 1, wherein said elastic member is provided with relief portions (51, 51a) at respective positions corresponding to the antinodes of a standing wave vibration for obviating interference with the rotating member, said stator being in contact with said rotor member at positions (52) corresponding to the nodes of said vibration, and said distributions of the rotor being equally divided relative to the node positions.

3. An ultrasonic stepping motor as claimed in any claims 1 or 2, in which said vibrator comprises a piezoelectric element (3) producing a piezoelectric effect on application of a voltage, said piezoeletric element having a number of vibratory sections (21, 205-208, 221-232, 303 a-b, 330 a-c, 531-542) wherein said piezoelectric element has driving portions each comprising a number of said vibratory sections which are configured substantially axisymmetrically.

4. An ultrasonic stepping motor according to claim 3, wherein the configurations of the vibratory sections producing the standing waves of the progressive wave vibratory state are substantially equal to each other.

5. An ultrasonic stepping motor according to claim 3, wherein the configuration of each driving portion comprising a plurality of vibratory sections of said piezoelectric element is substantially axisymmetric.

6. An ultrasonic stepping motor according to claim 5, wherein the configuration of the driving portion is substantially axisymmetric with respect to the position of an antinode of said vibratory wave produced on said stator within the range of the half wavelength of said vibratory wave.

7. An ultrasonic stepping motor according to claim 3, comprising a plurality of electrodes corresponding to and operatively coupled to the plurality of vibratory sections and a common electrode disposed on the elastic member;
and means for selectively energising the electrodes for creating selected vibrations, and including means for electrically connecting the electrodes, which are not energised to the common electrode to thereby release electric charge induced in the non-driven vibratory sections.

## Patentansprüche

1. Ultraschallschrittmotor mit:
einem Stator (2) mit einem elastischen Element;
einem Rotor (1) in Kontakt mit dem Stator, um durch Reibungskraft angetrieben zu sein;
Erzeugungsmitteln mit einem Vibrator (3) auf dem Stator, der im Gebrauch zwischen einer Mehrzahl an Vibrationszuständen in einer Zeitsequenz schaltet;
wobei der Rotor eine nicht gleichmäßige Konfiguration aufweist, wodurch ungleiche Verteilungen (11, 12, 13) von Steifheit und Masse hierin bereitgestellt sind;
dadurch gekennzeichnet, daß die nicht gleichmäßige Konfiguration derart ist, daß eine Erregung des Vibrators gleiche fortschreitende Wellen und Stehwellen sowohl in dem Stator als auch im Rotor in einem vorbestimmten Vibrationsmodus des Rotors zur Bewirkung einer Bewegung des Rotors in einer schrittweisen Art erzeugt.

2. Ultraschallschrittmotor gemäß Anspruch 1, bei dem das elastische Element mit Reliefbereichen (51, 51a) an entsprechenden Positionen entsprechend den Wellenbäuchen einer Stehwellenvibration zur Verhinderung einer Interferenz mit dem rotierenden Element versehen ist, wobei der Stator mit dem Rotorelement an Positionen (52) entsprechend den Knoten der Vibration in Kontakt steht und die Verteilungen des Rotors in bezug auf die Knotenpositionen gleich geteilt sind.

3. Ultraschallschrittmotor gemäß einem der Ansprüche 1 oder 2, bei dem der Vibrator ein piezoelektrisches Element (3) zur Erzeugung eines piezoelektrischen Effekts bei Anlegen einer Spannung aufweist, wobei das piezoelektrische Element eine Anzahl von Vibrationsabschnitten (21, 205-208, 221-232, 303 a-b, 330 a-c, 531-542) aufweist, wobei das piezoelektrische Element Antriebsbereiche mit jeweils einer Anzahl der Vibrationsabschnitte mit einer im wesentlichen axialsymmetrischen Konfiguration aufweist.

4. Ultraschallschrittmotor gemäß Anspruch 3, bei dem die Konfigurationen der Vibrationsabschnitte zur Erzeugung der Stehwellen des Vibrationszustands der fortschreitenden Wellen im wesentlichen einander gleich sind.

5. Ultraschallschrittmotor gemäß Anspruch 3, bei dem die Konfiguration jedes Antriebebereichs mit einer Mehrzahl von Vibrationsabschnitten des piezoelektrischen Elements im wesentlichen axialsymmetrisch ist.

6. Ultraschallschrittmotor gemäß Anspruch 5, bei dem die Konfiguration des Antriebsbereichs im wesentlichen axialsymmetrisch in bezug auf die Position eines Wellenbauchs der Vibrationswelle, hergestellt auf dem Stator, innerhalb des Bereichs der halben Wellenlänge der Vibrationswelle ist.

7. Ultraschallschrittmotor gemäß Anspruch 3 mit einer Mehrzahl von Elektroden entsprechend und operativ verbunden mit der Mehrzahl von Vibrationsabschnitten und einer gemeinsamen Elektrode auf dem elastischen Element;
und Mitteln zur selektiven Erregung der Elektroden zur Erzeugung ausgewählter Vibrationen, und mit Mitteln zur elektrischen Verbindung der Elektroden, welche nicht erregt sind, mit der gemeinsamen Elektrode, um dadurch in den nicht angetriebenen Vibrationsabschnitten induzierte elektrische Ladung freizusetzen.

## Revendications

1. Moteur pas à pas à ultrasons comprenant :
un stator (2) comprenant un élément élastique ;
un rotor (1) en contact avec le stator de manière à être entraîné par une force de frottement ;
des moyens de génération comprenant un vibreur (3) monté sur le stator et qui, en utilisation, alterne entre une pluralité d'états vibratoires dans une séquence temporelle ;
le rotor présentant une configuration non uniforme créant des répartitions inégales (11, 12, 13) de rigidité et de masse ;
caractérisé en ce que la configuration non uniforme est telle que l'excitation du vibreur génère des ondes progressives similaires et des ondes stationnaires à la fois dans le stator et le rotor dans un mode de vibration prédéterminé du rotor afin d'amener le rotor à se déplacer de manière progressive.

2. Moteur pas à pas à ultrasons selon la revendication 1, dans lequel ledit élément élastique est pourvu de parties de détente (51, 51a) au niveau de positions respectives correspondant aux ventres d'une vibration d'onde stationnaire pour prévenir les interférences avec l'élément rotatif, ledit stator étant en contact avec ledit élément de rotor à des positions (52) correspondant aux noeuds de ladite vibration et lesdites répartitions du rotor étant divisées également par rapport aux positions de noeud.

3. Moteur pas à pas à ultrasons selon l'une quelconque des revendications 1 ou 2, dans lequel ledit vibreur comprend un élément piézoélectrique (3) produisant un effet piézoélectrique lors de l'application d'une tension, ledit élément piézoélectrique présentant un certain nombre de sections vibratoires (21, 205-208, 221-232, 303 a-b, 330 a-c, 531-542), dans lequel ledit élément piézoélectrique présente des parties d'entraînement comprenant chacune un certain nombre desdites sections vibratoires qui sont configurées de manière sensiblement symétrique dans l'axe.

4. Moteur pas à pas à ultrasons selon la revendication 3, dans lequel les configurations des sections vibratoires produisant les ondes stationnaires de l'état vibratoire ondulatoire progressif sont sensiblement égales les unes aux autres.

5. Moteur pas à pas à ultrasons selon la revendication 3, dans lequel la configuration de chaque partie d'entraînement comprenant une pluralité de sections vibratoires dudit élément piézoélectrique est sensiblement symétrique dans l'axe.

6. Moteur pas à pas à ultrasons selon la revendication 5, dans lequel la configuration de la partie d'entraînement est sensiblement symétrique dans l'axe par rapport à la position d'un ventre de ladite onde vibratoire produite sur ledit stator dans la gamme de la moitié de la longueur d'onde de ladite onde vibratoire.

7. Moteur pas à pas à ultrasons selon la revendication 3, comprenant une pluralité d'électrodes correspondant à et couplées de manière opérationnelle à la pluralité de sections vibratoires et une électrode commune disposée sur l'élément élastique ;
et des moyens pour exciter de manière sélective les électrodes pour créer des vibrations sélectionnées et comprenant des moyens pour connecter électriquement les électrodes, qui ne sont pas excitées, à l'électrode commune afin de libérer ainsi une charge électrique induite dans les sections vibratoires non entraînées.
